# EUROPEAN PATENT APPLICATION

(11) **EP 3 228 406 A1**
(43) Date of publication of application: **11.10.2017**
(21) Application number: 17160056.2
(22) Date of filing: 09.03.2017
(51) Int. Cl.: B22F 3/105, B22F 3/24

(54) **METHOD OF MANUFACTURE OF A COMPONENT**

(30) Priority: 04.04.2016 GB 201605702
(71) Applicant: Rolls-Royce plc, London SW1E 6AT (GB)
(72) Inventor: Garry, Ian, Derby, Derbyshire DE24 8BJ (GB); Johnson, Charles, Derby, Derbyshire DE24 8BJ (GB)
(74) Representative: Rolls-Royce plc

(57) **Abstract**

A method for the manufacture of a component having a defined geometry and dimensions is described. In sequence, the steps of the method involve;
a) using an additive layer manufacturing process, building a three-dimensional net shape of the component;
b) applying a subtractive surface finishing operation to the product of step a);
c) applying a heat treatment to the product of step b) whereby to provide a component to the defined geometry and dimensions.

## Description

The present disclosure concerns the manufacture of an engineering component, for example a component of a gas turbine engine. More particularly, a method of manufacture involving an additive layer manufacturing (ALM) step and a heating step is described.

Additive layer manufacturing (ALM) techniques are known for use in defining complex geometries to high tolerances and can be used as an alternative to casting. In these methods a component is built up layer by layer onto a base plate until the 3D component is defined. In some ALM methods, layers are created by selective treatment of layers within a mass of particulate material, the treatment causing cohesion of selected regions of particulates into a solid mass. For example, the particulate is a ferrous or non-ferrous alloy powder and the treatment involves local heating using a laser or electron beam. Specific examples of such ALM methods include (without limitation); laser sintering, laser melting, direct laser deposition (DLD) and electron beam melting (EBM).

When the component is a high performance engineering component, for example, a component of a gas turbine engine, further treatment steps are often necessary to address porosity and/or weaknesses in the component surface which might result in failure of the component under high pressure, high stress and/or high temperature conditions. Processes are often impacting and may include blasting or peening the surface. Hot Isostatic Pressing (HIP) is one commonly used process which may be used optionally in addition to a blasting or peening step. Such a heat treatment is conventionally applied subsequent to any impacting method.

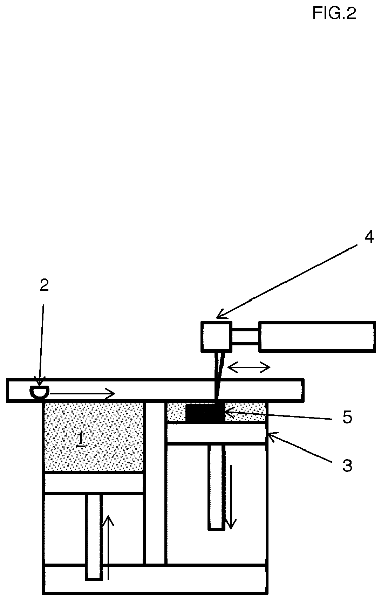

A prior art method is now described with reference to the accompanying Figure 2. In the described method, a component is manufactured from a high-temperature alloy by a Powder Bed Direct Laser Deposition (PB DLD) or Direct Metal Laser Sintering (DMLS) additive manufacturing process. A powder bed 1 is raised into the path of a spreading device 2 which spreads a thin layer of powder across a base-plate 3. The base-plate typically comprises a tool steel.

Selected regions of the powder corresponding to a shape which it is intended to build are fused together (and also to the base-plate) by heat from laser 4. The base-plate 3 is gradually lowered with respect to the laser during the process enabling layer upon layer of powder to be applied and sintered by the laser. This layering process can create one or more components simultaneously.

Subsequent processing steps are performed on the component. Firstly, the component is optionally blasted with a blast media (for example, beads) to create a compressed layer at the external surface. This compressed layer imposes a compressive force on underlying material resisting the propagation of cracks in the main body of the component. Benefits of an impacting process such as peening or grit blasting can be outweighed by the impacting medium creating dimensional variations and surface deformities which, in the case of gas turbine engine components, can impair performance of the end product. Consequently, a component must be designed such that these dimensional variations and surface deformities can be removed in a subtractive manufacturing process to provide a finished component to the desired geometry.

After the impacting process the component and baseplate may then be subjected to a Hot Isostatic Pressing (HIP) step. The HIP process substantially eliminates micro-cracks in the material structure, so improving the properties of the component material. This is a particularly important step for high-temperature nickel alloys (often used in the manufacture of gas turbine engine components), which when produced by DLD alone are very susceptible to cracking due to high micro-porosity and residual stresses in the component. The HIP step compresses the component whilst heating it.

After the HIP process has been completed, any structural elements and the base-plate are removed using a subtractive manufacturing process and finally, the remaining component may be subjected to a finishing operation.

Subtracting manufacturing processes involve operations which remove material. Material removal is typically performed in two stages; in a first stage, roughing cuts are used to remove large amounts of material quickly to produce a shape close to the desired form, but leaving some material on the piece for a subsequent finishing operation.

In a finishing operation, finishing cuts are used to complete the part and achieve the final dimension, tolerances, and surface finish of the component.

Typically, roughing operations are done at high feeds and depths, for example feeds of 0.4-1.25 mm/rev and depths of 2.5-20 mm. By contrast, finishing operations are carried out at lower feeds and depths, for example feeds of 0.0125-0.04 mm/rev and depths of 0.75-2.0 mm. Cutting speeds used for finishing operations are in general higher than those used in roughing cuts.

According to a first aspect there is provided a method for the manufacture of a component having a defined geometry and dimensions comprising, in sequence;
a) using an additive layer manufacturing process, building a three-dimensional net shape of the component;
b) applying a finishing operation to the product of step a);
c) applying a heat treatment to the product of step b) whereby to provide a component to the defined geometry and dimensions.

The defined geometry and dimensions may include a tolerance range within which the product of step c) is included. The finishing operation of step b) desirably does not include an impacting process which roughens or textures a surface of the net shape of the component. The finishing operation may be a subtractive operation; that is it involves removal of a small amount of material at the surface of the net-shape component. The finishing operation does not involve additive manufacturing.

By performing a surface finishing operation on the net shape prior to a subsequent heat treatment, the propagation of macro-cracks can be significantly reduced, thus the separate operations of surface compression (for example by peening or blasting) prior to heating, and roughing and finishing after a heating operation, can be replaced by a single operation performed prior to a heat treatment which may be a final heat treatment. The performance of such operations prior to a heat treatment is contrary to convention. Heat treatments are known to be a cause of distortion in non-uniform three dimensional shapes. Conventionally, such distortions are remedied by subsequent machining or bending processes.

Examples of suitable finishing operations include (without limitation); low stress grinding processes including electrochemical grinding and abrasive flow machining; polishing processes whether mechanical, chemical or chemical-mechanical; buffing, burnishing, soda blasting, brushing and linishing. Other alternatives include conventional machining processes such as milling and turning where the process parameters such as feeds, depths and cutting speeds are carefully controlled as discussed above.

Careful design of the component and any associated structural support can avoid problematic distortion during a subsequent heat treatment. For example, the Applicant's co-pending GB patent application no. GB1514801.8 filed 20 August 2015 (from which subsequent patent applications may claim priority) discloses a method for the manufacture of a component having a defined geometry comprising;
a) defining a pre-component geometry comprising interim shape elements and additional, sacrificial elements for supporting interim shape elements;
b) on a base plate, depositing multiple layers of a powder comprising a material from which the component is to be manufactured;
c) sintering the powder to form the pre-component to the defined pre-component geometry;
d) removing at least some of the sacrificial elements from the pre-component;
e) subjecting the remaining pre-component from step d) to a HIP step; and,
f) removing remaining sacrificial elements from the pre-component product of step e) to provide a component to the defined component geometry;
wherein in the definition of the pre-component geometry, the interim shape elements differ with respect to corresponding final shape elements in the defined component geometry such that during the HIP step, the interim shape elements adjust to form final shape elements in the defined component geometry.

However, if the sacrificial support elements are removed prior to the HIP step, for given HIP process parameters any deformation of shape elements during the HIP process is resultant from gravitational assistance and the orientation of the pre-component in the HIP furnace. The skilled person will appreciate that for a given defined shape and orientation and with a knowledge of the HIP processing parameters, the gravitational impact on the pre-component during the HIP step is predictable and can be determined. GB1514801.8 filed 20 August 2015 proposes that by reversing the calculation, a pre-component geometry can be defined which will predictably and reliably adjust to form a desired component geometry following the HIP process. This enables some or all of the support structures to be removed from the pre-component prior to the HIP step thereby reducing the risk of cracking in the post HIP component.

Thus, by anticipating and controlling net shape geometry through design of the net shape built during the ALM process, undesirable deformations in the defined geometry of the component during heat treatment can be avoided allowing a finishing process to be brought forward in the sequence of manufacturing steps. It will be understood that for some components, distortion during heat treatment might not present a problem. The method of the invention remains applicable to such components.

Accordingly, in an option, the net shape comprises interim shape elements, the interim shape elements differing with respect to the defined component geometry such that during the heating step, the interim shape elements adjust to form the defined component geometry. Optionally the ALM step may further provide sacrificial support elements. Some or all of the sacrificial support elements may be removed in an interim step preceding the surface finishing operation. Alternatively, the sacrificial support elements may be removed after the heating step.

The reduction or avoidance of operations performed on a component after heat treatment further decreases the likelihood of new stress concentrations being created in the finished product.

The heat treatment step may involve HIP. Alternatively, the heat treatment step may involve annealing, normalising or tempering.

Components made in accordance with the method of the invention may be incorporated into a gas turbine engine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a gas turbine engine which may comprise components made in accordance with the method of the invention;
Figure 2 shows schematically an additive layer manufacturing method known to be used in prior art manufacturing;
Figure 3 shows an embodiment of a method in accordance with the invention.

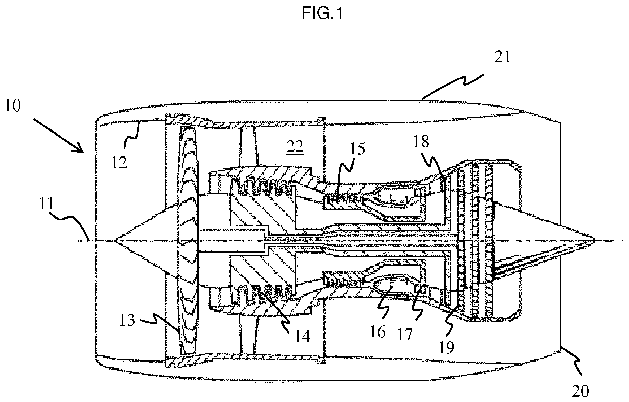

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Many components of the gas turbine engine could be manufactured by the method of the invention. For example (but without limitation), components in the turbine sections 17, 18 and 19, or the combustor 16 may be manufactured in accordance with the invention. The method is well suited to the manufacture of components with non-linear geometries.

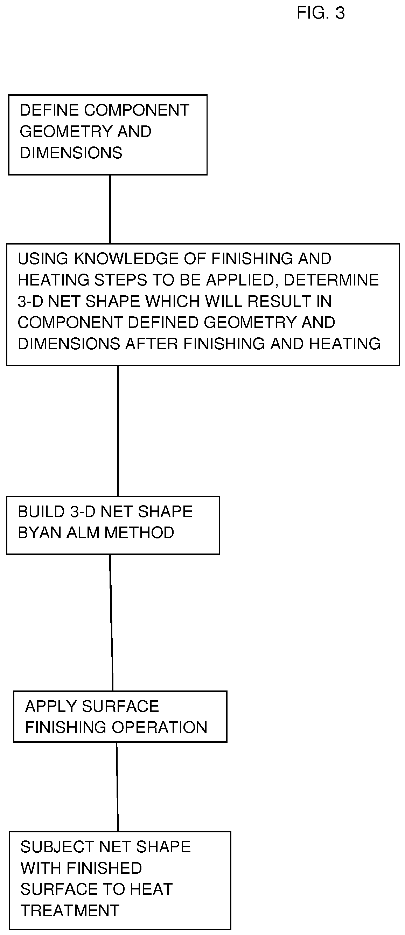

Figure 2 has been discussed above. Figure 3 presents a flow chart of steps taken in sequence when performing a method in accordance with one embodiment of the invention.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method for the manufacture of a component having a defined geometry and dimensions comprising, in sequence;
a) using an additive layer manufacturing process, building a three-dimensional net shape of the component;
b) applying a subtractive surface finishing operation to the product of step a);
c) applying a heat treatment to the product of step b) whereby to provide a component to the defined geometry and dimensions.

2. A method as claimed in claim 1 wherein the subtractive surface finishing operation removes not more than 2mm from the surface of the product of step a).

3. A method as claimed in claim 1 or 2 wherein the net shape comprises interim shape elements and the interim shape elements differ with respect to the component defined geometry and/or dimensions such that during the heating step, the interim shape elements adjust to form the defined component defined geometry and dimensions.

4. A method as claimed in claim 1, 2 or 3 wherein the component defined geometry and dimensions includes a tolerance range within which the product of step c) is included.

5. A method as claimed in any preceding claim wherein the finishing operation of step b) is selected from; a low stress grinding process, electrochemical grinding, abrasive flow machining, mechanical polishing, chemical polishing, chemical-mechanical polishing, buffing, burnishing, soda blasting, brushing and linishing.

6. A method as claimed in any of claims 1 to 4 wherein the finishing operation of step b) is a milling or turning operation wherein the feeds are maintained at or below 0.04 mm/rev and cuts are to a depth of 2 mm or less.

7. A method as claimed in any preceding claim further including, in the additive layer manufacturing process step providing sacrificial support elements which are removed in an interim step preceding the surface finishing operation.

8. A method as claimed in any preceding claim wherein the additive layer manufacturing process of step a) involves fusing of a powder which comprises a ferrous or non-ferrous alloy, or a ceramic.

9. A method as claimed in claim 8 wherein fusing of the powder is achieved using a laser or an electron beam.

10. A method as claimed in any preceding claim wherein the additive layer manufacturing process of step a) is a powder bed process.

11. A method as claimed in any preceding claim wherein the heat treatment of step c) is hot isostatic pressing (HIP).

12. A method as claimed in any of claims 1 to 10 wherein the heat treatment is selected from annealing, normalising or tempering.
